Europäisches Patentamt

European Patent Office

Office européen des brevets

(19)

(11) Publication number: **0 388 221**
**A1**

(12)

# EUROPEAN PATENT APPLICATION

(21) Application number: **90302838.9**

(51) Int. Cl.5: **E04H 5/12**

(22) Date of filing: **16.03.90**

(30) Priority: **16.03.89 JP 64642/89**

(43) Date of publication of application:
**19.09.90 Bulletin 90/38**

(84) Designated Contracting States:
**BE DE GB IT**

(71) Applicant: **ISHIKAWAJIMA-HARIMA JUKOGYO
KABUSHIKI KAISHA**
**2-1, Ote-machi 2-chome**
**Chiyoda-ku Tokyo-to(JP)**

Applicant: **NIPPON SHOKUBAI KAGAKU
KOGYO CO. LTD.**
**1-1, Koraibashi, 4-chome**
**Chuo-ku Osaka-shi Osaka-fu(JP)**

(72) Inventor: **Kato, Kanji**
**No. 705-67, Ochi-cho**
**Chiba-shi, Chiba-ken(JP)**
Inventor: **Mochizuki, Kesaaki**
**No. 3-4, Shiroyama, Kukisaki-machi**
**Inashiki-gun, Ibaraki-ken(JP)**

Inventor: **Hamamoto, Akira**
**No. 36-8, Koyabe 1-chome**
**Yokosuka-shi, Kanagawa-ken(JP)**
Inventor: **Oya, Hiroshi**
**No. 4-30-9, Egota, Nakano-ku**
**Tokyo-to(JP)**
Inventor: **Ando, Kozo**
**No. 21-2, Hakozaki-cho**
**Nihonbashi, Chuo-ku, Tokyo-to(JP)**
Inventor: **Namaritani, Kazuo**
**No. 2-498-1, Shikishima-cho**
**Nara-shi, Nara-ken(JP)**
Inventor: **Fujita, Kenichi**
**No. 5-1-304, Nishi-machi**
**Takatsuki-shi, Osaka-fu(JP)**
Inventor: **Nagaoka, Futami**
**No. 942-26-204, Mutsuura-cho, Kanasawa-ku**
**Yokohama-shi, Kanagawa-ken(JP)**

(74) Representative: **Jennings, Nigel Robin et al**
**KILBURN & STRODE 30 John Street**
**London WC1N 2DD(GB)**

(54) **Cooling tower.**

(57) A cooling tower includes a supporting framework (11) comprising interconnected vertical columns (12) of hollow tubular construction, horizontal beams (13) of solid construction and inclined braces (14) of hollow tubular construction, all of which are made of fibre reinforced plastic material.

EP 0 388 221 A1

# Fig. 3

## COOLING TOWER

The present invention relates to a cooling tower for cooling warm water.

Cooling towers for cooling warm water through direct contact with a large volume of surrounding air have been used widely in various industrial fields including air conditioning.

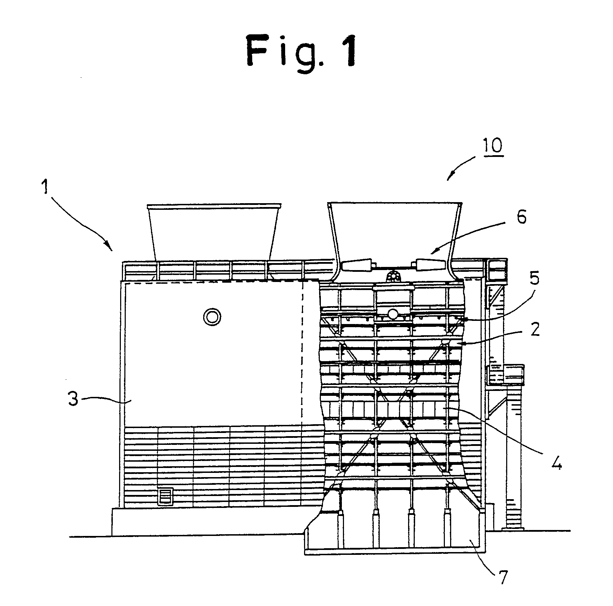

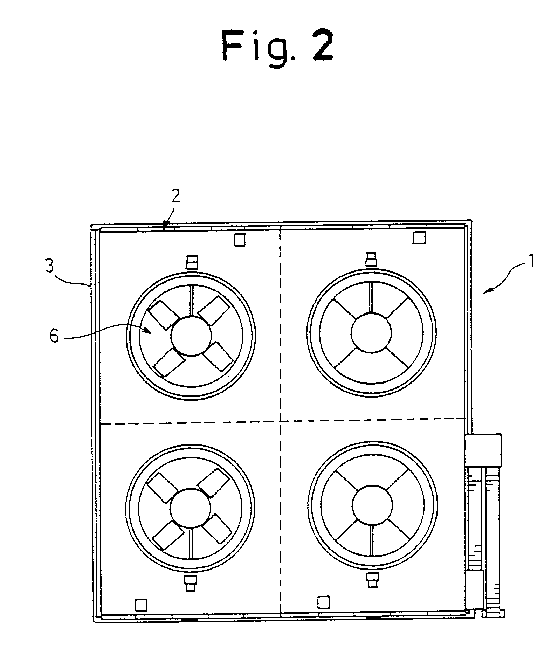

Figure 1 is a partly cutaway side view of a known relatively large cooling tower; and Figure 2 is a plan view of the cooling tower of Figure 1. The illustrated cooling tower includes a tower body 1 comprising a main framework 2 and an outer sheathing wall 3 which define a space which accommodates a filling 4. A distribution system 5 and fan 6 are arranged above the filling 4 to bring the warm water into contact through the filling 4 with a counterflow or crossflow of air.

The main framework is typically composed of Douglas fir timbers, pressure treated with preservative, or steel members plated with zinc through a hot dip galvanising process. Such a framework 2 still tends to be easily corroded since it is exposed to high temperatures and humidity in the tower.

A framework composed of timber or steel members will begin to be corroded in about ten or seven to eight years, respectively. Corrosion occurs at and around the upper portion of the framework 2 adjacent to the distribution system 5, and this necessitates repair of the tower.

As the corrosion spreads, corroded timber or rust particles will disperse into the cooled water, resulting in deterioration of the performance of the cooling tower due to clogging of the strainer in the water cooling system or an increase in the load on the pump.

The present invention was devised to overcome the above and other problems encountered in conventional cooling towers. The object of the invention is to provide a cooling tower which has a long service life even in a corrosive environment and the operational control of which is easy, without its performance being impaired.

According to the present invention a cooling tower including a framework is characterised in that the framework substantially consists of members made of fibre reinforced plastics material. The framework preferably comprises interconnected vertical columns of hollow tubular construction, horizontal beams of solid construction and inclined braces of hollow tubular construction.

Further features and details of the invention will be apparent from the following description of one specific embodiment which is given by way of example with reference to Figures 3 to 9 of the accompanying drawings, in which:-

Figure 3 is a side view of the framework of a cooling tower in accordance with the invention;

Figure 4 is a side view of a foundation connection in the framework of Figure 3;

Figure 5 is a plan view of the connection of Figure 4;

Figure 6 is an elevation of a further two connections in the framework of Figure 3;

Figure 7 is a section through the portion VII in Figure 6, on an enlarged scale;

Figure 8 is a side view of an upper connection in the framework; and

Figure 9 is a side view of a connection between bracing members in the framework.

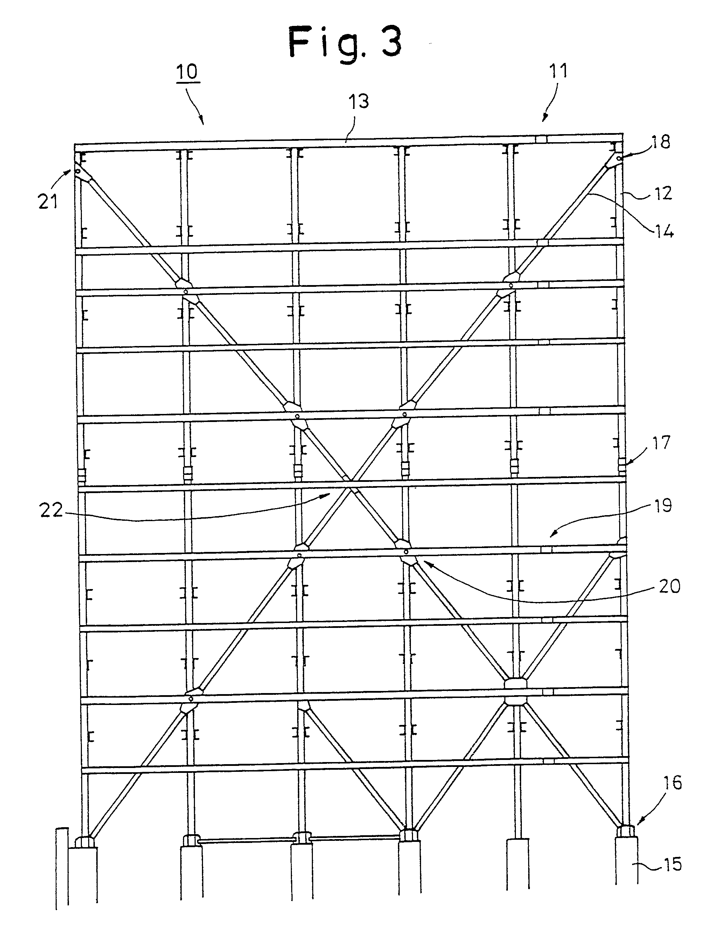

The cooling tower 10 illustrated in Figures 3 to 9 includes a main or load-bearing framework 11 composed of FRP (fibre reinforced plastics) members. The upright columns 12 are rectangular cross-section hollow pipes of FRP; the transverse beams 13 are solid, profiled bars made of FRP; and the inclined braces 14 are also hollow rectangular cross-section FRP pipes.

These FRP members are initially subjected to various texts, and experiments are conducted, in order to measure their buckling strength and the variation in their strength in wet conditions. Based on the results of these tests, the material composition, cross-section and the thickness of the walls of the members are selected.

A problem arises on assembly when the FRP members are connected together. If FRP members are connected together in the same way as timber structural members, by means of a connector having pawls which are driven into the members, the resulting connection is not strong enough. Alternatively, the FRP members could be drilled on site as steel structural members are. In this event, a number of holes are made which match corresponding holes in a connector through which are passed bolts, secured by nuts. Such a connection would still not be strong enough, however. This method of connection is especially unsuitable for hollow FRP pipes: a bolt hole has to be drilled right through the pipe since a bolt cannot be tightened against an inside wall of the pipe. Drilling such a hole through a hollow FRP pipe on site is extremely difficult. Moreover, tightening a bolt passing all the way through a hollow FRP pipe tends to cause deformation of the pipe. Thus, conventional connection systems are unsuitable for connecting FRP structural members.

Therefore, a connector which is adapted to the shape of members to be interconnected and which has the required strength is used. Blind rivets are driven through a connector into the wall of a hollow pipe to connect the pipe to the connector. When increased strength is required, a bolt connection which causes no deformation of the pipe when the bolt is tightened is used together with the blind rivets.

Each column comprises a plurality of interconnected column members 12 and each of the lowermost column members 12 is securely anchored by a foundation connector 16 at its lower end to one of a number of foundations 15, made of concrete and surrounding a cooled water basin 7. The column members 12 are axially abutted and connected by vertical connectors 17 to produce columns having the desired height, that is the height of the tower 10.

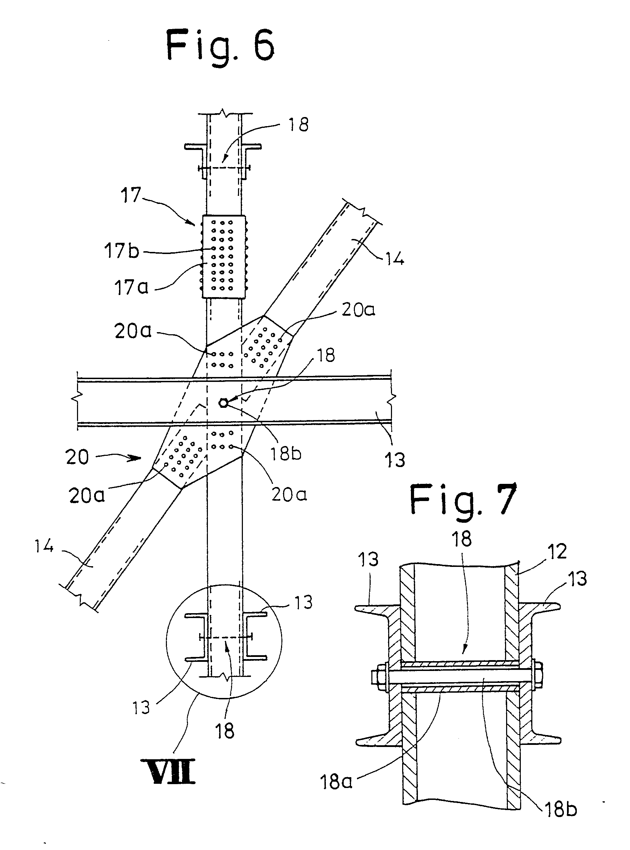

The horizontal transverse beams are securely connected to the column members 12 by bolts 18b each extending through a spacing piece 18a fitted in the column member 12 (see Fig. 7) The transverse beams comprise beam members 13 which are axially abutted and connected by horizontal connectors 19 to produce beams spanning the overall width of the tower 10.

In order to reinforce the structure of columns and beams, braces 14 are diagonally arranged in the structure. Each brace comprises a plurality of bracing members 14 connected together axially and connected to the structure by cross-beam or bracing connectors 20 at points where the columns 12 intersect with the beams 13. Each of the lowermost bracing members 14 is securely anchored at its lower end to a foundation connection 16. The upper end of each of the uppermost bracing members 14 is securely connected to the associated column member 12 by an upper connector 21. The bracing members 14 are connected together by an intersection connector 22 where they intersect.

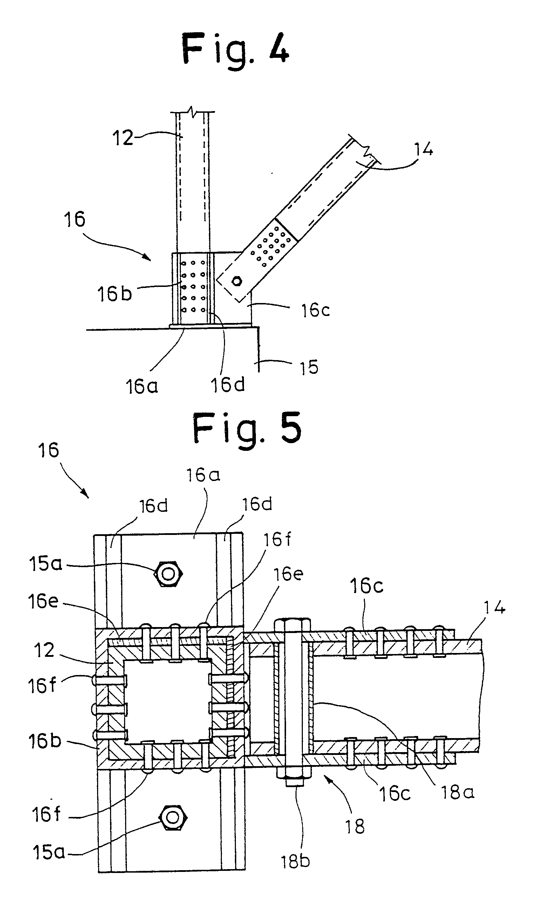

The foundation connectors 16 are made of metal and, as shown in Figures 4 and 5, each is provided with a bottom plate 16a which has a plurality of holes through which pass anchor bolts 15a extending from the foundation 15. A rectangular cross section hollow pipe 16b, which is adapted to receive a column member 12, is welded to the plate 16a. A pair of connection plates 16c, defining a space between them, for connection with a bracing member 14, extend from each of one or more side surfaces of the hollow pipe 16b. A rib 16d extends between the bottom plate 16a and the hollow pipe 16b, to strengthen the connector.

In use, a foundation connector 16 is first securely connected to the foundation 15 by the anchor bolts 15a and then the lower end of one of the lowermost column members 12 is inserted into the hollow pipe 16b. Next, spacers 16e are inserted to fill the remaining space in the hollow pipe 16b around the column member 12. A number of holes are drilled through the column member 12, aligned with preformed holes in each side of the hollow pipe 16b which have been previously drilled in the factory. Thereafter, blind rivets 16f are driven in turn through the aligned holes in the pipe 16b and column member 12 to securely join the column member 12 to the connector 16.

When a bracing member 14 is connected to the connection plates 16c during assembly of the framework 11, bolts and blind rivets are used. As shown in Figure 5, the bracing member 14 has a bolt receiving portion 18 into which a spacing piece or sleeve 18a is inserted with its ends received in opposed holes in the wall of the bolt receiving section 18. The bolt receiving portion 18 of the bracing member 14 is first positioned between the connection plates 16c. Then, a bolt 18b is inserted into the spacing piece 18a from the exterior of the plates 16c and is securely tightened by a nut as tight as possible. No deformation of the bracing member 14 occurs due to the fact that the compressive force on the bolt is substantially absorbed by the sleeve 18a.

Then, the bracing member 14 is drilled on site such that the drilled holes are in alignment with preformed holes in the connection plates 16c, which have been previously drilled in the factory. Thereafter, blind rivets 16f are driven in turn through the aligned holes in the plates 16c and bracing member 14 so that the bracing member 14 is securely joined to the plates 16c.

The vertical connector 17, as shown in Figure 6, is used to connect axially adjacent abutted upper and lower column members 12. It comprises a rectangular cross-section hollow metal pipe 17a which receives the ends of the column members 12.

In use, the sides of the adjacent upper and lower column members 12 are drilled on site so that the drilled holes are in alignment with preformed holes in the hollow pipe 17a which have been previously drilled in the factory. Thereafter, blind rivets 17b are driven in turn through the aligned holes in the pipe 17a and column members 12 so that the column members 12 are securely interconnected.

Alternatively, the vertical connector 17 may be joined, in the factory, to the upper or lower column members 12 using blind rivets. Thus the time taken to join the column members 12 is shortened.

The horizontal connectors 19, as shown in Figure 3, for interconnecting adjacent transverse beam members 13, takes the form of a single metal plate, since the transverse beam members 13 are shaped FRP bars having an angled or channel cross-section. Blind rivets are driven through holes in opposite ends of the connector 19, in turn, as described above, so that the adjacent transverse beam members 13 are securely joined together.

The bracing connectors 20 are made of metal and used to connect bracing members 14 to the structure at a point where a column member 12 intersects with a transverse beam member 13. As shown in Figure 6, the connectors 20 take the form of a pair of elongate hexagonal plates which are fastened to opposite sides of a column member 12.

Each hexagonal plate has a bolt hole at the centre which, in use, is aligned with the bolt hole of a bolt receiving portion 18 of a column member 12. A bolt 18b is inserted through the beam member 13, hexagonal plates and column member 12 and tightened using a nut. Blind rivets 20a are driven, in turn, through holes in upper and lower portions of the connector 20, adjacent the column members 12, so that the connector 20 is connected to the column members 12. Blind rivets 20a are also driven, in turn, through further holes in further upper and lower portions of the connector 20, adjacent upper and lower bracing members 14, so that the connector 20 is connected also to the bracing members 14.

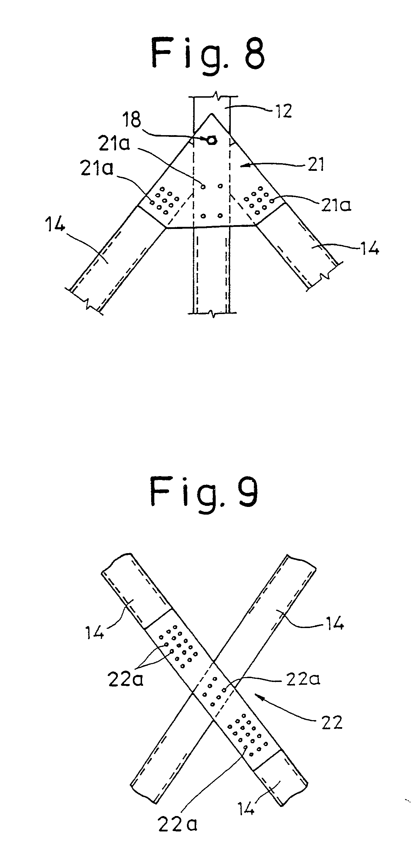

The upper connectors 21 are made of metal and used to join the upper end of the uppermost bracing member 14 to an associated column member 12. As shown in Figure 8, where the upper ends of two bracing members 14 are joined to a column member 12 on opposite sides thereof, the connector 21 generally takes the form of two triangular plates. This connector 21 is joined to the upper portion of the column member 12 on both sides thereof.

The connector 21 is connected to a column member 12 by passing a bolt through a bolt hole in the connector 21 and a bolt hole in a bolt receiving portion 18 in the column member 12 and tightening it. The connector 21 is further secured to the column member 12 by driving blind rivets 21a through previously drilled holes in the connector 21 below the above-mentioned bolt hole. Blind rivets 21a are also driven, in turn, through further holes in a portion of the connector 21 in alignment with the bracing members 14, so that the upper ends of the bracing members 14 are connected to the column member 12.

The intersection connector 22, as shown in Figure 9, is made of metal and is used at a diagonal intersection between bracing members 14 to connect two axially abutted bracing members 14 together and to the intersecting bracing member. The connecting plates of a connector 22 are applied to opposite sides of the two bracing members 14 to be connected.

The connector 22 takes the form of a rectangle and has holes at the centre and at each end. The connector 22 is connected through the holes at the centre to the continuous portion of a crossing bracing member 14 by means of blind rivets 22a. The abutting bracing members 14 are securely connected by driving blind rivets 22a through the holes at each end of the connector 22.

The above-described connectors 16 to 22 enable FRP rectangular cross-section hollow pipes and FRP profiled bars to be securely connected to each other.

If a number of bolts were used in each connection between FRP members, the load which the joint could tolerate would be the same as that which could be tolerated by a joint using a single bolt. This is because the bolt holes in the connectors and FRP members would have to have a diameter of 2 or 3 mm greater than that of the bolts in order to allow for inaccuracies in machining and during installation.

If a number of bolts were used in each joint, it might be possible to achieve the necessary improved accuracy by drilling the holes in the FRP members on site, so that they are aligned with preformed holes in the connectors.

However, in fact, it is almost impossible to drill a hole extending through the opposed walls of a hollow pipe with a high degree of accuracy on site.

Thus, according to the present invention, connections using a single bolt are employed, which ensure a higher degree of accuracy. Furthermore, using blind rivets permits the pipe walls to be drilled on site, and eliminates the necessity of drilling right through a hollow pipe. A strong joint or connection is thus ensured by the blind rivets which receive a uniformly distributed load.

The strength of the joint can be freely adjusted by increasing or decreasing the number of blind rivets used.

As a result, the work of connecting the members together, when constructing a cooling tower, is made considerably easier. The efficiency of this work is further improved since FRP members are light and easy to handle.

In the assembled cooling tower, the resistance to corrosion is remarkably improved compared with known towers and the service life of the tower is increased. Substantially no contaminants such as timber pieces or rust particles are mixed into the cooled water and the operational control is simplified.

It will be appreciated that the FRP pipes may have any cross section or shape other than rectangular.

The connectors may be made of materials such as synthetic resins, instead of metal. Their shape or configuration may be changed as needed.

The FRP members are not limited to being made of composite materials having thermosetting plastic matrices. The term FRP refers to reinforced plastics in a wider sense, including FRTP (fibre reinforced thermo-plastics).

## Claims

1. A cooling tower including a framework characterised in that the framework (11) substantially consists of members (12,13,14) made of fibre reinforced plastics material.

2. A cooling tower as claimed in claim 1 characterised in that the framework comprises interconnected vertical columns (12) of hollow tubular construction, horizontal beams (13) of solid construction and inclined braces (14) of hollow tubular construction.

# Fig. 1

# Fig. 2

# Fig. 3

# Fig. 4

12
14
16
16b
16c
16a
16d
15

# Fig. 5

16
16a
16d
16d
16f
15a
16e
16e
16c
16f
14
12
16f
16b
16c
18a
16f
18
15a
18
18b

# Fig. 6

# Fig. 7

# Fig. 8

# Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 222 516 (USS) <br> * Page 9, lines 8-30; figures 5,6,7A,7B * | 1 | E 04 H 5/12 |
| Y | | 2 | |
| | --- | | |
| Y | US-A-3 922 827 (ROSENBLATT) <br> * Column 4, lines 32-68; column 5, lines 1-68; column 6, lines 1-13; figures 1,6,9,17 * | 2 | |
| | --- | | |
| X | THE OIL AND GAS JOURNAL, vol. 65, no. 44, 30th October 1967, pages 145-147, Tulsa Oklahoma, US; "Cooling towers use plastics" <br> * Page 145, column 1, lines 1-54; column 2, lines 1-13 * | 1 | |
| | ----- | | |

TECHNICAL FIELDS SEARCHED (Int. Cl.5)

E 04 H

The present search report has been drawn up for all claims

| Place of search | Date of completion of the search | Examiner |
|---|---|---|
| THE HAGUE | 29-05-1990 | BARBAS A. |